# EUROPEAN PATENT SPECIFICATION

(11) **EP 2 876 310 B1**
(45) Date of publication and mention of the grant of the patent: **10.01.2018**
(21) Application number: 14194535.2
(22) Date of filing: 24.11.2014
(51) Int. Cl.: F16B 5/07, F02C 7/04, B64D 33/02

(54) **Engine inlet duct installation**
Motoreinlasskanal
Conduit d'admission d'un moteur

(30) Priority: 25.11.2013 US 201314088539
(43) Date of publication of application: 27.05.2015
(73) Proprietor: Sikorsky Aircraft Corporation, Stratford, CT 06615 (US)
(72) Inventor: Chasen, Scott A., Orange, CT Connecticut 06477 (US)
(74) Representative: Schmitt-Nilson Schraud Waibel Wohlfrom Patentanwälte Partnerschaft mbB

(56) References cited:
- EP-A1- 0 333 919
- WO-A1-2007/085347
- FR-A1- 2 379 720

## Description

The subject matter disclosed herein relates to engine inlets, more specifically, to installation of engine inlet ducts and/or cowling.

Engines for, for example, aircraft such as helicopters or other rotorcraft utilize engine inlet ducting to direct airflow into the compressor of the engine. Some systems, for example, single engine systems, utilize a bifurcated inlet duct, which takes two airflow streams and directs them to the compressor inlet. In such ducts, fastening of the two duct legs to each other is required both inside and outside of the duct to ensure a proper seal and prevent leakage into the duct. WO 2007/085347 shows a device for fastening an add-on part, which is formed with tongue-like projections, to a support part having members which are connected to one another. At least a number of the members has a cage wall which surrounds a receiving space and on which is formed a ramp structure which projects into the receiving space and has an inclined piece, which rises obliquely from an inlet side to an outlet side of the respective member, and a stop piece. The stop piece has a greater spacing from a contact side of the cage wall than that region of the inclined piece which is adjacent to the inlet side. In this way, when the ramp structure is in engagement with pins which are attached to the support part, the members press against the tongue-like projections and fasten the add-on part to the support part. Typically, the inside of the annulus is accessible, so that a traditional bolted flange joint between the two duct halves, can be tightened via traditional tools, such as wrenches, to install the inlet duct. In particular systems, however, a position of engine components, such as an engine shaft, prevents access via hands or traditional tools to the fastening locations necessary to provide the desired seal between the two duct halves.

In one embodiment, a method of securing two components to each other includes locating a mounting strip at a second mounting flange of a second component consisting of a second inlet duct leg of an inlet duct assembly of a rotary wing aircraft. The mounting strip is slidably affixed to the second component and includes a strip opening and a tightening ramp located at the strip opening. A first component consisting of a first inlet duct leg of the inlet duct assembly is located such that a first mounting flange of the first component abuts the second mounting flange. A pre-set fastener is located at the first mounting flange. The fastener extends through the strip opening. The mounting strip is slid in a direction to increase tension on the fastener via an increasing height of the tightening ramp under a fastener head of the fastener, thereby securing the second mounting flange to the first mounting flange.

Particular embodiments may include any of the following optional features, alone or in combination:
Sliding the mounting strip may comprise extending a tightening bolt of a mounting bracket through a stop; and tightening a nut disposed at the stop over the bolt to urge the mounting bracket toward the stop.

Sliding the mounting strip may increase a tightening ramp height between a fastener head and the first mounting flange to increase the tension on the fastener.

The strip opening may have a keyhole shape.

The fastener may be any of a bolt, screw or pin.

A plurality of fasteners may be located at the first mounting flange, and the mounting strip may include a plurality of strip openings, a tightening ramp located at each of the plurality of the strip openings. Further, the first component may be located such that each of the plurality of fasteners extends through a corresponding strip opening of the plurality of strip openings.

The first inlet duct leg and/or the second duct leg may be secured to an airframe. In another embodiment, an inlet duct assembly includes a first inlet duct leg. The first inlet duct leg includes a first mounting flange and a fastener extending from the first mounting flange. The fastener has a fastener head located at a selected distance from the mounting flange. A second duct leg includes a second mounting flange configured to abut the first mounting flange and a slidably located mounting strip having a strip opening. The fastener extends therethrough. The mounting strip includes a tightening ramp having an increasing height in one direction. Sliding the mounting strip along the second mounting flange increases a tension on the fastener and thus secures the first mounting flange to the second mounting flange.

Particular embodiments may include any of the following optional features, alone or in combination:
The inlet duct assembly further may comprise: a tightening bolt extending from one end of the mounting strip; a stop disposed at the second mounting flange; and a tightening nut disposed at the stop, such that tightening the tightening nut over the tightening bolt urges sliding of the mounting strip toward the stop.

The tightening ramp may have increasing height with distance from the stop.

Sliding the mounting strip may increase a height of tightening ramp between the fastener head and the second mounting flange.

The fastener may be one of a bolt, screw or pin.

The strip opening may have a keyhole shape.

The first inlet duct leg and/or the second duct leg may be secured to an airframe.

These and other advantages and features will become more apparent from the following description taken in conjunction with the drawings.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a illustration of an embodiment of a rotary winged aircraft;
FIG. 2 is plan view of an embodiment of an engine inlet layout;
FIG. 3 is a cross-sectional view of an embodiment of an engine inlet layout;
FIG. 4 is a schematic view of an embodiment of an inlet duct half;
FIG 5 is an axial view of an embodiment of fan inlet duct half;
FIG. 6 is a schematic view of an embodiment of another inlet duct half;
FIG. 7 is a profile view of a mounting plate for an inlet duct; and
FIG. 8 is a schematic view of an embodiment of an assembled inlet duct.

The detailed description explains embodiments of the invention, together with advantages and features, by way of example with reference to the drawings.

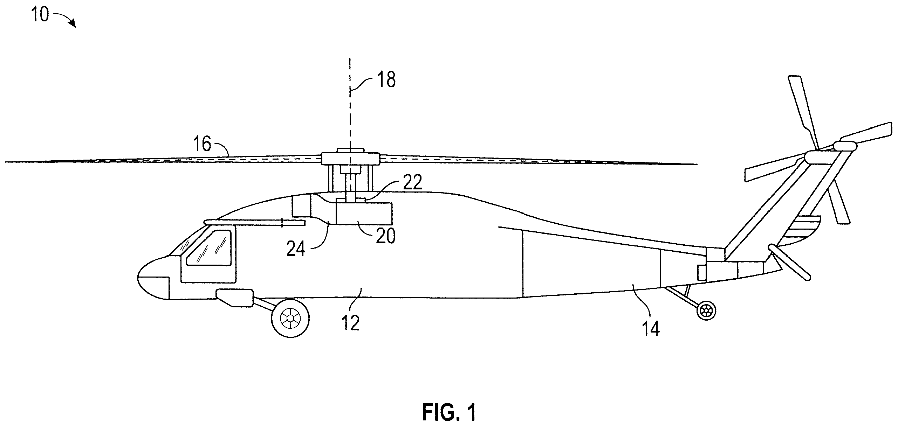

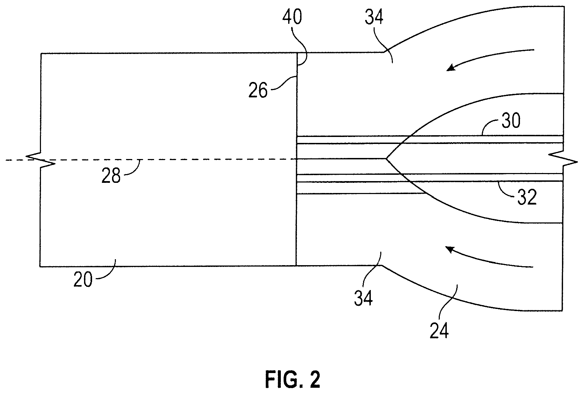

Shown in FIG. 1 is a schematic view of an embodiment of a rotary wing aircraft, in this embodiment a helicopter 10. The helicopter 10 includes an airframe 12 with an extending tail 14. A rotor assembly 16 is located at the airframe 12 and rotates about a main rotor axis 18. The main rotor assembly 16 is driven by an engine 20 via a gearbox 22. To supply airflow to the engine 20, an air inlet duct 24 is provided to direct the airflow to an engine inlet 26 (FIG. 2).

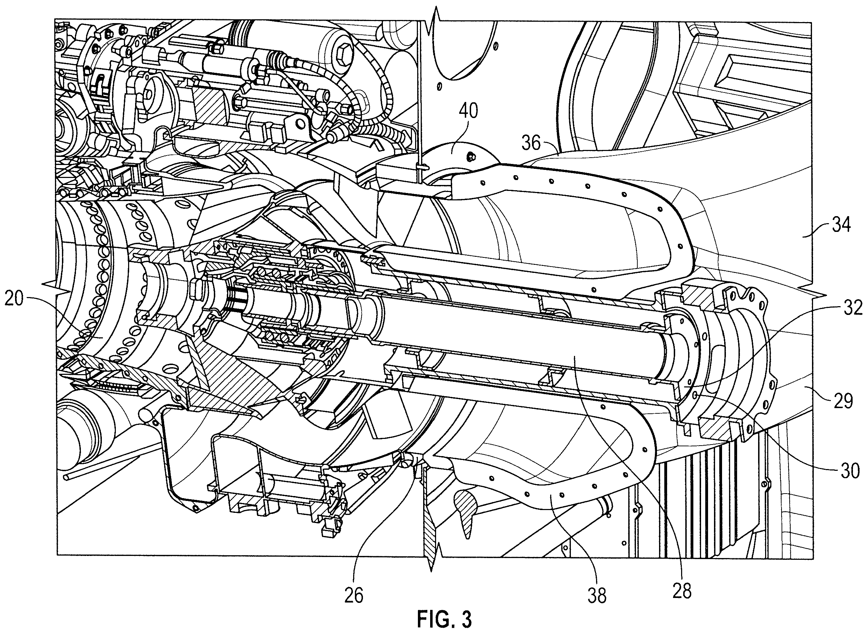

Referring to FIG. 2, the engine 20 rotates about an engine axis 28, with an engine shaft 30 and a mount shaft 32 located at the engine axis 28 to support the engine 20. The air inlet duct 24 is bifurcated, with duct legs 34 extending from the engine inlet 26 along each lateral side of the engine axis 28, around the mount shaft 32. As shown in FIG. 3, each duct leg 34 has an upper lobe 36 and a lower lobe 38 extending to the engine axis 28, where the upper lobes 36 of the duct legs 34 are joined together, and similarly the lower lobes 38 of the duct legs 34 are joined together. Even though, in the embodiment shown, the lobes 36/38 are upper and lower lobes 36/38 and the duct legs 34 are arranged on lateral sides of the engine axis 28, it is to be appreciated that other arrangements of duct legs 34, for example, extending from upper and lower sides of the engine axis 28, may be utilized. Similarly, the duct lobes 36/38, may be arranged on lateral sides of the engine axis 28. The air inlet duct 24 may also be secured to an axial location, such as a forward bulkhead 40.

Due to the location of the mount shaft 32 and the shape of the inlet duct 24, typical methods used to secure the duct legs 34 to each other are unable to be used, as the area between the duct legs 34, as well as an interior of the inlet duct 24 is inaccessible with conventional tools.

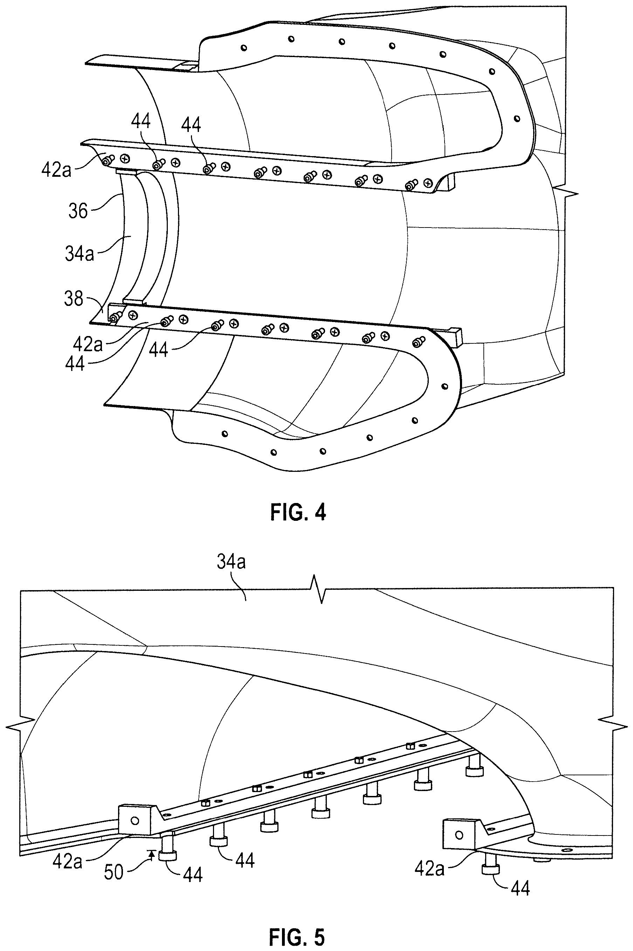

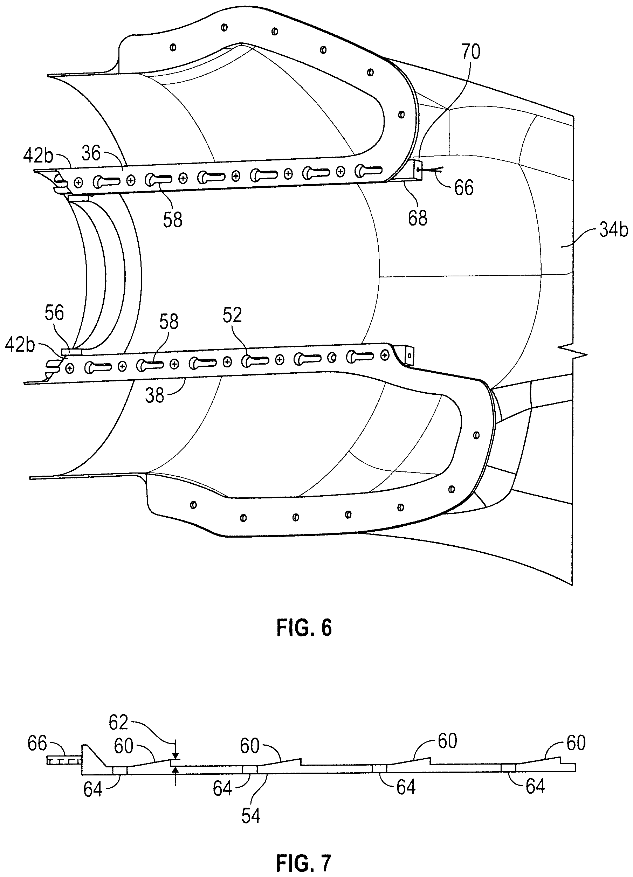

Referring now to the schematic view of FIG. 4, to fasten the duct legs 34 to one another, each duct leg 34 is formed with a mounting flange 42 extending along an axial length of the duct leg 34. A first duct leg 34a includes a first mounting flange 42a at both the upper lobe 36 and lower lobe 38 of the first duct leg 34a. The first mounting flange 42a includes a plurality of fasteners 44 extending therefrom toward a second mounting flange 42b of a second duct leg 34b (shown in FIG. 6). The fasteners 44, for example, bolts, screws, pins or the like have a shaft 46 and a head 48, with the head 48 located at a selected head height 50, as shown in FIG. 5.

Referring now to FIG. 6, the second mounting flange 42b is located at both the upper lobe 36 and lower lobe 38 of the second duct leg 34b and includes a plurality of fastener openings 52 through which the fasteners 44 extend, and a mounting strip 54 located at an interior side 56 of the second mounting flange 42b. The mounting strip 54 is slidable on the second mounting flange 42b in an axial direction. In some embodiments, the mounting strip 54 is formed from a metal material. The mounting strip 54 has a plurality of strip openings 58, which in some embodiments are keyhole shaped. Further, referring now to FIG. 7, a tightening ramp 60 is located at each strip opening 58. Each tightening ramp 60 increases in ramp height 62 with distance from a circular portion 64 of the strip opening 58. Further, the mounting strip 54 includes a tightening bolt 66 located at an axial end of the mounting strip 54 and extending in an axial direction into, referring again to FIG. 6, a mounting stop 68 of the second mounting flange 52b, which includes a rotatable tightening nut. 70.

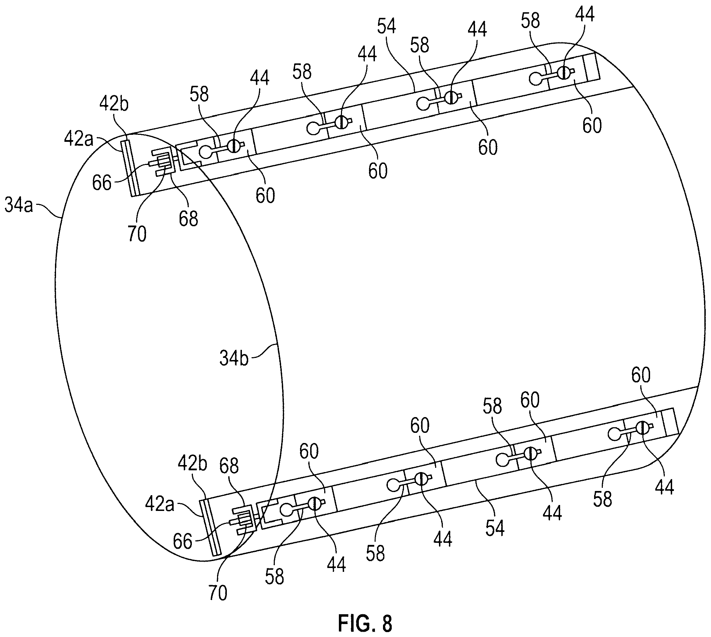

Referring now to FIG. 8, to install the inlet duct 24 to the airframe 12, the first duct leg 34a including the fasteners 44 at the first mounting flange 42a is installed to the airframe 12 and secured in place at, for example, the forward bulkhead 40. Next, the second duct leg 34b is installed to the airframe 12 and secured at, for example, the forward bulkhead 40 so that the heads 48 of the fasteners 44 extend through circular portions 64 of the strip openings 58. The tightening nut 70 is then rotated, tightening the tightening nut 70 onto the tightening bolt 66, which has the effect of drawing the mounting strip 54 axially toward the mounting stop 68. This axial movement of the mounting strip 54 increases a height of the tightening ramps 60 under the fastener heads 48. This, in turn, increases a tension on the fasteners 44 drawing the second mounting flange 42b toward the first mounting flange 42a and sealing therebetween.

In an alternate embodiment, the mounting strip 54 is affixed to the flange of the second mounting flange. In such manner that when the fastener heads 48 are inserted into the strip openings 58, the flanges of the two inlet halves can be moved relative to one another axially in which the height of the tightening ramps 60 under the fastener heads increase, in turn increasing the tension on the fasteners 44 drawing the second mounting flange 42b toward the first mounting flange 42a as in the above.

The structure and method described herein provides for remote fastening between two components via the sliding mounting strip 54 relative to fasteners 44 through the use of the axially directed tightening bolt 66 to cause movement of the mounting strip 54. While described herein relative to engine inlet ducts, it is to be appreciated that the structure and method described would be useful in other applications, such as fastening components of cowlings or fairings to one another.

Particular embodiments are set out in the following numbered paragraphs:
1. A method of securing two components to each other comprising: locating a mounting strip at a first mounting flange of a first component, the mounting strip slidably affixed to the first component and including a plurality of strip openings and a tightening ramp located at each strip opening of the plurality of strip openings; locating a second component such that a second mounting flange of the second component abuts the first mounting flange, a plurality of fasteners located at the second mounting flange, a fastener of the plurality of fasteners extending through each strip opening of the plurality of strip openings; and sliding the mounting strip in a direction to increase tension on the plurality of fasteners via an increasing height of the tightening ramp under a fastener head of the fastener, thereby securing the first mounting flange to the second mounting flange.
2. The method of paragraph 1, wherein sliding the mounting strip comprises extending a tightening bolt of the mounting bracket through a stop; and tightening a nut disposed at the stop over the bolt to urge the mounting bracket toward the stop.
3. The method of paragraph 1 or 2, wherein sliding the mounting strip increases a tightening ramp height between a fastener head and the second mounting flange to increase the tension on the fastener.
4. The method of any of paragraphs 1 to 3, wherein a strip opening of the plurality of strip openings has a keyhole shape.
5. An inlet duct assembly comprising: a first inlet duct leg, the first inlet duct leg including a first mounting flange and a fastener extending from the first mounting flange, the fastener having a fastener head disposed at a preselected distance from the mounting flange; a second duct leg including a second mounting flange configured to abut the first mounting flange; a slidably located mounting strip having a strip opening, the fastener extending therethrough and a tightening ramp having an increasing height in one direction; wherein sliding the mounting strip along the second mounting flange increases a tension on the fastener and thus secures the first mounting flange to the second mounting flange.
6. The inlet duct assembly of paragraph 5, further comprising a tightening bolt extending from one end of the mounting strip; a stop disposed at the second mounting flange; and a tightening nut disposed at the stop, such that tightening the tightening nut over the tightening bolt urges sliding of the mounting strip toward the stop.
7. The inlet duct assembly of paragraph 5 or 6, wherein the tightening ramp has increasing height with distance from the stop.
8. The inlet duct assembly of any of paragraphs 5 to 7, wherein sliding the mounting strip increases a height of tightening ramp between the fastener head and the second mounting flange.
9. The inlet duct assembly of any of paragraphs 5 to 8, wherein the fastener is one of a bolt, screw or pin.
10. The inlet duct assembly of any of paragraphs 5 to 9, wherein the first inlet duct leg and/or the second duct leg are secured to an airframe.
11. The inlet duct assembly of any of paragraphs 5 to 10, wherein the strip opening has a keyhole shape.
12. A method of installing an inlet duct assembly to a rotary winged aircraft comprising locating a first inlet duct leg at an engine inlet of a rotary winged aircraft, the first inlet duct leg including a first mounting flange and a fastener extending from the first mounting flange, the fastener having a fastener head disposed at a preselected distance from the mounting flange; locating a second inlet duct leg at the engine inlet such that a second mounting flange of the second inlet duct leg abuts the first mounting flange, the second inlet duct leg including a slidably located mounting strip having a strip opening, the fastener extending therethrough and a tightening ramp having an increasing height in one direction; and sliding the mounting strip to increase tension on the fastener thereby securing the second mounting flange to the first mounting flange.
13. The method of paragraph 12, wherein sliding the mounting strip comprises extending a tightening bolt of the mounting bracket through a stop; and tightening a nut disposed at the stop over the bolt to urge the mounting bracket toward the stop.
14. The method of paragraph 12 or 13, wherein sliding the mounting strip increases a tightening ramp height between a fastener head and the second mounting flange to increase the tension on the fastener.
15. The method of any of paragraphs 12 to 14, wherein the fastener is one of a bolt, screw or pin.
16. The method of any of paragraphs 12 to 15, wherein the first inlet duct leg and/or the second duct leg are secured to an airframe.
17. The method of any of paragraphs 12 to 16, wherein the ramped strip is fixed to the flange of the second inlet leg rather than made slideable. The two legs of each inlet half are then moved relative to one another to slide the fastener head of the first inlet duct up the ramp strip on the second inlet duct leg.
18. The method of any of paragraphs 12 to 17, wherein the strip opening has a keyhole shape.

A method of securing two components (34a; 34b) to each other includes locating a mounting strip (54) at a second mounting flange (43a) of a second component (34b). The mounting strip (54) is slidably affixed to the second component (34b) and includes a plurality of strip openings (58) and a tightening ramp (60) located at each strip opening (58) of the plurality of strip openings. A first component (34a) is located such that a first mounting flange (42a) of the first component (34a) abuts the second mounting flange (42b). A plurality of fasteners (44) are located at the first mounting flange (42a). A fastener (44) of the plurality of fasteners extends through each strip opening (58) of the plurality of strip openings. The mounting strip (54) is slid in a direction to increase tension on the plurality of fasteners (44) via an increasing height of the tightening ramp (60) under a fastener head (48) of the fastener (44), thereby securing the second mounting flange (43b) to the first mounting flange (42a).

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method of securing two components (34a, 34b) to each other, wherein a first component (34a) is a first inlet duct leg of an inlet duct assembly (24) of a rotary winged aircraft (10) and a second component (34b) is a second inlet duct leg of the inlet duct assembly (24); the method comprising:
locating a mounting strip (54) at a second mounting flange (42b) of the second component (34b), the mounting strip (54) slidably affixed to the second component (34b) and including:
a strip opening (58); and
a tightening ramp (60) located at the strip opening (58);
locating the first inlet duct leg (34a) at an engine inlet of the rotary winged aircraft (10), the first inlet duct leg (34a) including
a first mounting flange (42a); and
a fastener (44) extending from the first mounting flange (42a), the fastener (44) having a fastener head (48) disposed at preselected distance from the first mounting flange (42a);
locating the second inlet duct leg (34b) at the engine inlet such that the second mounting flange (42b) of the second inlet duct leg (34b) abuts the first mounting flange (42a), the second inlet duct leg (34a) including the slidably located mounting strip (54) having:
the strip opening (58), the fastener (44) extending therethrough; and
the tightening ramp (60) having an increasing height in one direction; and
sliding the mounting strip (54) to increase tension on the fastener (44) via an increasing height of the tightening ramp (60) under a fastener head (48) of the fastener (44), thereby securing the second mounting flange (42b) to the first mounting flange (42a).

2. The method of Claim 1, wherein sliding the mounting strip (54) comprises:
extending a tightening bolt (66) of a mounting bracket through a stop (68); and
tightening a nut (70) disposed at the stop (68) over the bolt (66) to urge the mounting bracket toward the stop (68).

3. The method of Claim 1 or 2, wherein sliding the mounting strip (54) increases a tightening ramp height between a fastener head (48) and the first mounting flange (42a) to increase the tension on the fastener (44).

4. The method of any of Claims 1 to 3, wherein the strip opening (58) has a keyhole shape.

5. The method of any of Claims 1 to 4, wherein the fastener (44) is any of a bolt, screw or pin.

6. The method of any of Claims 1 to 5, wherein a plurality of fasteners (44) are located at the first mounting flange (42a), and the mounting strip (54) includes a plurality of strip openings (58), a tightening ramp (60) located at each of the plurality of the strip openings (58); and wherein the first component (42a) is located such that each of the plurality of fasteners (44) extends through a corresponding strip opening (58) of the plurality of strip openings.

7. The method of Claim 1, wherein the first inlet duct leg (34a) and/or the second duct leg (34b) are secured to an airframe (12).

8. An inlet duct assembly (24) comprising:
a first inlet duct leg (34a), the first inlet duct leg (34a) including:
a first mounting flange (42); and
a fastener (44) extending from the first mounting flange (42a), the fastener (44) having a fastener head (48) disposed at a preselected distance from the first mounting flange (42a);
a second duct leg (34b) including:
a second mounting flange (34b) configured to abut the first mounting flange (42a);
a slidably located mounting strip (54) having:
a strip opening (58), the fastener (44) extending therethrough; and
a tightening ramp (60) having an increasing height in one direction;
wherein sliding the mounting strip (54) along the second mounting flange (42b) increases a tension on the fastener (44) and thus secures the first mounting flange (42a) to the second mounting flange (42b).

9. The inlet duct assembly (24) of Claim 8, further comprising:
a tightening bolt (66) extending from one end of the mounting strip (54);
a stop (68) disposed at the second mounting flange (42b); and
a tightening nut (70) disposed at the stop (68), such that tightening the tightening nut (70) over the tightening bolt (66) urges sliding of the mounting strip (54) toward the stop (68).

10. The inlet duct assembly (24) of Claim 8 or 9, wherein the tightening ramp (60) has increasing height with distance from the stop (68).

11. The inlet duct assembly (24) of any of Claims 8 to 10, wherein sliding the mounting strip (54) increases a height of tightening ramp (60) between the fastener head (44) and the second mounting flange (42b).

12. The inlet duct assembly (24) of any of Claims 8 to 11, wherein the fastener (44) is one of a bolt, screw or pin; and/or the strip opening (58) has a keyhole shape.

13. The inlet duct assembly (24) of any of Claims 8 to 12, wherein the first inlet duct leg (34a) and/or the second duct leg (34b) are secured to an airframe (12).

## Patentansprüche

1. Verfahren zum Sichern von zwei Komponenten (34a, 34b) aneinander, wobei eine erste Komponente (34a) ein erstes Einlasskanalteilstück einer Einlasskanalanordnung (24) eines Drehflüglers (10 ist und eine zweite Komponente (34b) ein zweites Einlasskanalteilstück der Einlasskanalanordnung (24) ist; das Verfahren umfassend:
Positionieren eines Befestigungsstreifens (54) an einem zweiten Befestigungsflansch (42b) der zweiten Komponente (34b), wobei der Befestigungsstreifen (54) an der zweiten Komponente (34b) verschiebbar angebracht ist und Folgendes aufweist:
eine Streifenöffnung (58); und
eine Zuspannrampe (60), die an der Streifenöffnung (58) positioniert ist;
Positionieren des ersten Einlasskanalteilstücks (34a) an einem Motoreinlass des Drehflüglers (10), wobei das erste Einlasskanalteilstück (34a) Folgendes aufweist
einen ersten Befestigungsflansch (42a); und
ein Befestigungsmittel (44), das sich von dem ersten Befestigungsflansch (42a) erstreckt, wobei das Befestigungsmittel (44) einen Befestigungskopf (48) aufweist, der in einem vorgewählten Abstand von dem ersten Befestigungsflansch (42a) angeordnet ist;
Positionieren des zweiten Einlasskanalteilstücks (34b) an dem Motoreinlass, so dass der zweite Befestigungsflansch (42b) des zweiten Einlasskanalteilstücks (34b) an den ersten Befestigungsflansch (42a) anliegt, wobei das zweite Einlasskanalteilstück (34a) den verschiebbar positionierten Befestigungsstreifen (54) aufweist mit:
der Streifenöffnung (58), dem sich dadurch erstreckenden Befestigungsmittel (44); und
der Zuspannrampe (60) mit einer steigenden Höhe in einer Richtung; und
Verschieben des Befestigungsstreifens (54), um durch eine steigende Höhe der Zuspannrampe (60) die Spannung auf das Befestigungsmittel (44) unter einem Befestigungskopf (48) des Befestigungsmittels (44) zu erhöhen, wodurch der zweite Befestigungsflansch (42b) an dem ersten Befestigungsflansch (42a) gesichert wird.

2. Verfahren nach Anspruch 1, wobei das Verschieben des Befestigungsstreifens (54) Folgendes umfasst:
Erweitern einer Spannschraube (66) einer Befestigungsklammer durch einen Anschlag (68); und Festziehen einer Mutter (70), die an dem Anschlag (68) über der Schraube (66) angeordnet ist, um die Befestigungsklammer zu dem Anschlag (68) hin zu drängen.

3. Verfahren nach Anspruch 1 oder 2, wobei das Verschieben des Befestigungsstreifens (54) eine Höhe der Zuspannrampe zwischen einem Befestigungskopf (48) und dem ersten Befestigungsflansch (42a) erhöht, um die Spannung auf das Befestigungsmittel (44) zu erhöhen.

4. Verfahren nach einem der Ansprüche 1 bis 3, wobei die Streifenöffnung (58) eine Schlüsselloch-Form aufweist.

5. Verfahren nach einem der Ansprüche 1 bis 4, wobei das Befestigungsmittel (44) eine Schraube, ein Gewinde oder ein Bolzen ist.

6. Verfahren nach einem der Ansprüche 1 bis 5, wobei eine Vielzahl von Befestigungsmitteln (44) an dem ersten Befestigungsflansch (42a) positioniert ist, und der Befestigungsstreifen (54) eine Vielzahl von Streifenöffnungen (58) aufweist, eine Zuspannrampe (60), die an jeder der Vielzahl von Streifenöffnungen (58) positioniert ist; und wobei die erste Komponente (42a) so positioniert ist, dass sich jedes der Vielzahl von Befestigungsmitteln (44) durch eine entsprechende Streifenöffnung (58) der Vielzahl von Streifenöffnungen erstreckt.

7. Verfahren nach Anspruch 1, wobei das erste Einlasskanalteilstück (34a) und/oder das zweite Einlasskanalteilstück (34b) an einem Flugwerk (12) befestigt ist.

8. Einlasskanalanordnung (24), umfassend:
ein erstes Einlasskanalteilstück (34a), wobei das erste Einlasskanalteilstück (34a) Folgendes aufweist:
einen ersten Befestigungsflansch (42); und
ein Befestigungsmittel (44), das sich von dem ersten Befestigungsflansch (42a) erstreckt, wobei das Befestigungsmittel (44) einen Befestigungskopf (48) aufweist, der in einem vorgewählten Abstand von dem ersten Befestigungsflansch (42a) angeordnet ist;
ein zweites Einlasskanalteilstück (34b), aufweisend:
einen zweiten Befestigungsflansch (34b), der dazu konfiguriert ist, dass er an dem ersten Befestigungsflansch (42a) anliegt;
einen verschiebbar positionierten Befestigungsstreifen (54) mit:
einer Streifenöffnung (58), dem sich dadurch erstreckenden Befestigungsmittel (44); und
einer Zuspannrampe (60) mit einer steigenden Höhe in einer Richtung;
wobei das Verschieben des Befestigungsstreifens (54) entlang des zweiten Befestigungsflansches (42b) eine Spannung auf das Befestigungsmittel (44) erhöht und folglich den ersten Befestigungsflansch (42a) an dem zweiten Befestigungsflansch (42b) sichert.

9. Einlasskanalanordnung (24) nach Anspruch 8, ferner umfassend:
eine Spannschraube (66), die sich von einem Ende des Befestigungsstreifens (54) erstreckt;
einen Anschlag (68), der an dem zweiten Befestigungsflansch (42b) angeordnet ist; und
eine Spannmutter (70), die an dem Anschlag (68) angeordnet ist, so dass das Festziehen der Mutter (70)über der Schraube (66) das Verschieben des Befestigungsstreifens (54) zu dem Anschlag (68) hindrängt.

10. Einlasskanalanordnung (24) nach Anspruch 8 oder 9, wobei die Zuspannrampe (60) eine steigende Höhe mit Abstand von dem Anschlag (68) aufweist.

11. Einlasskanalanordnung (24) nach einem der Ansprüche 8 bis 10, wobei das Verschieben des Befestigungsstreifens (54) eine Höhe der Zuspannrampe (60) zwischen dem Befestigungskopf (44) und dem zweiten Befestigungsflansch (42b) erhöht.

12. Einlasskanalanordnung (24) nach einem der Ansprüche 8 bis 11, wobei das Befestigungsmittel (44) eines von einer Schraube, einem Gewinde oder einem Bolzen ist; und/oder die Streifenöffnung (58) eine Schlüsselloch-Form aufweist.

13. Einlasskanalanordnung (24) nach einem der Ansprüche 8 bis 12, wobei das erste Einlasskanalteilstück (34a) und/oder das zweite Einlasskanalteilstück (34b) an einem Flugwerk (12) befestigt ist/sind.

## Revendications

1. Procédé d'immobilisation de deux composants (34a, 34b) l'un par rapport à l'autre, dans lequel un premier composant (34a) est un premier bras de conduit d'admission d'un ensemble conduit d'admission (24) d'un aéronef à voilure tournante (10) et un second composant (34b) est un second bras de conduit d'admission de l'ensemble conduit d'admission (24) ; le procédé comprenant :
le positionnement d'une bande de fixation (54) au niveau d'une seconde bride de fixation (42b) du second composant (34b), la bande de fixation (54) étant fixée de manière coulissante au second composant (34b) et comportant :
une ouverture de bande (58) ; et
une rampe de serrage (60) positionnée au niveau de l'ouverture de bande (58) ;
le positionnement du premier bras de conduit d'admission (34a) au niveau de l'admission de moteur de l'aéronef à voilure tournante (10), le premier bras de conduit d'admission (34a) comportant
une première bride de fixation (42a) ; et
une attache (44) s'étendant à partir de la première bride de fixation (42a), l'attache (44) ayant une tête d'attache (48) disposée à une distance présélectionnée de la première bride de fixation (42a) ;
le positionnement du second bras de conduit d'admission (34b) au niveau de l'admission de moteur de sorte que la seconde bride de fixation (42b) du second bras de conduit d'admission (34b) vient en butée contre la première bride de fixation (42a), le second bras de conduit d'admission (34a) comportant la bande de fixation positionnée de manière coulissante (54) ayant :
l'ouverture de bande (58), l'attache (44) s'étendant à travers elle ; et
la rampe de serrage (60) ayant une hauteur croissante dans une direction ; et
le coulissement de la bande de fixation (54) pour accroître la tension sur l'attache (44) via une hauteur croissante de la rampe de serrage (60) sous une tête d'attache (48) de l'attache (44), immobilisant ainsi la seconde bride de fixation (42b) par rapport à la première bride de fixation (42a).

2. Procédé selon la revendication 1, dans lequel le coulissement de la bande de fixation (54) comprend :
l'extension d'un boulon de serrage (66) d'un support de fixation à travers une butée (68) ; et
le serrage d'un écrou (70) disposé au niveau de la butée (68) sur le boulon (66) pour entraîner le support de fixation vers la butée (68).

3. Procédé selon la revendication 1 ou 2, dans lequel le coulissement de la bande de fixation (54) accroît une hauteur de rampe de serrage entre une tête d'attache (48) et la première bride de fixation (42a) pour accroître la tension sur l'attache (44).

4. Procédé selon l'une quelconque des revendications 1 à 3, dans lequel l'ouverture de bande (58) a une forme de trou de serrure.

5. Procédé selon l'une quelconque des revendications 1 à 4, dans lequel l'attache (44) est l'un d'un boulon, d'une vis ou d'une broche.

6. Procédé selon l'une quelconque des revendications 1 à 5, dans lequel une pluralité d'attaches (44) sont positionnées au niveau de la première bride de fixation (42a), et la bande de fixation (54) comporte une pluralité d'ouvertures de bande (58), une rampe de serrage (60) positionnée au niveau de chacune de la pluralité d'ouvertures de bande (58) ; et dans laquelle le premier composant (42a) est positionné de telle sorte que chacune de la pluralité d'attaches (44) s'étend à travers une ouverture de bande correspondante (58) de la pluralité d'ouvertures de bande.

7. Procédé selon la revendication 1, dans lequel le premier bras de conduit d'admission (34a) et/ou le second bras de conduit (34b) sont immobilisés sur une cellule avion (12).

8. Ensemble conduit d'admission (24) comprenant :
un premier bras de conduit d'admission (34a), le premier bras de conduit d'admission (34a) comportant :
une première bride de fixation (42) ; et
une attache (44) s'étendant à partir de la première bride de fixation (42a), l'attache (44) ayant une tête d'attache (48) disposée à une distance présélectionnée de la première bride de fixation (42a) ;
un second bras de conduit (34b) comportant :
une seconde bride de fixation (34b) configurée pour venir en butée contre la première bride de fixation (42a) ;
une bande de fixation positionnée de manière coulissante (54) ayant :
une ouverture de bande (58), l'attache (44) s'étendant à travers elle ; et
une rampe de serrage (60) ayant une hauteur croissante dans une direction ;
dans lequel le coulissement de la bande de fixation (54) le long de la seconde bride de fixation (42b) accroît une tension sur l'attache (44) et immobilise ainsi la première bride de fixation (42a) par rapport à la seconde bride de fixation (42b).

9. Ensemble conduit d'admission (24) selon la revendication 8, comprenant en outre :
un boulon de serrage (66) s'étendant à partir d'une extrémité de la bande de fixation (54) ;
une butée (68) disposée au niveau de la seconde bride de fixation (42b) ; et
un écrou de serrage (70) disposé au niveau de la butée (68), de telle sorte que le serrage de l'écrou de serrage (70) sur le boulon de serrage (66) entraîne le coulissement de la bande de fixation (54) vers la butée (68).

10. Ensemble conduit d'admission (24) selon la revendication 8 ou 9, dans lequel la rampe de serrage (60) a une hauteur croissante en fonction de la distance à partir de la butée (68) .

11. Ensemble conduit d'admission (24) selon l'une quelconque des revendications 8 à 10, dans lequel le coulissement de la bande de fixation (54) accroît une hauteur de rampe de serrage (60) entre la tête d'attache (44) et la seconde bride de fixation (42b).

12. Ensemble conduit d'admission (24) selon l'une quelconque des revendications 8 à 11, dans lequel l'attache (44) est l'un d'un boulon, d'une vis ou d'une broche ; et/ou l'ouverture de bande (58) a une forme de trou de serrure.

13. Ensemble conduit d'admission (24) selon l'une quelconque des revendications 8 à 12, dans lequel le premier bras de conduit d'admission (34a) et/ou le second bras de conduit (34b) sont immobilisés sur une cellule avion (12).
